# EUROPEAN PATENT APPLICATION

(11) **EP 1 667 296 A2**
(43) Date of publication of application: **07.06.2006**
(21) Application number: 05111616.8
(22) Date of filing: 02.12.2005
(51) Int. Cl.: H02G 1/12

(54) **Machine for cutting and stripping electric cables**

(30) Priority: 03.12.2004 IT BO20040751
(71) Applicant: MAKFIL SYSTEM S.r.l., 40016 SAN GIORGIO DI PIANO (IT)
(72) Inventor: Frabetti, Fabio, 40017, SAN GIOVANNI IN PERSICETO (IT)
(74) Representative: Jorio, Paolo

(57) **Abstract**

A machine (10) for cutting and stripping electric cables (CV1, CV2) having a sheath of insulating material. The machine (10) has a cutting and stripping head (100) for cutting and stripping the electric cables (CV1, CV2); and an electronic central control unit (1000) for controlling the devices forming part of the machine (10). The machine (10) is characterized in that the head (100) in turn has at least one cutting device (102) for cutting the cable (CV1, CV2); and at least two stripping devices (107, 108) for stripping the ends (CP1, CP2, CP3, CP4) of the cable (CV1, CV2).

## Description

The present invention relates to a machine for cutting and stripping electric cables.

Currently used machines for cutting and stripping electric cables employ a single tool assembly for the stripping operation.

That is, on a conventional machine, the electric cable is first stripped at one end, then fed forward the desired length and cut and stripped at the other end.

Currently marketed machines are therefore slow, and do not allow output rates compatible with fast write-off the machine.

It is an object of the present invention to provide a machine for cutting and stripping electric cables, designed to halve production time and so double output per unit of time.

As will be seen in the detailed description of a preferred embodiment of the present invention (see below), with the machine and method according to the present invention, the cable is stripped simultaneously at both ends, thus halving production time.

According to the present invention, therefore, there is provided a machine for cutting and stripping electric cables, as claimed in Claim 1.

A non-limiting embodiment of the present invention will be described by way of example with reference to the accompanying drawings, in which:
Figure 1 shows a first step in a method of cutting and stripping electric cables, which method is implemented using a machine which is the main object of the present invention;
Figure 2 shows a second step in the method implemented using the Figure 1 machine;
Figure 3 shows a third step in the method implemented using the Figure 1 and 2 machine;
Figure 4 shows a fourth step in the method implemented using the Figure 1-3 machine;
Figure 5 shows a fifth step in the method implemented using the Figure 1-4 machine;
Figure 6 shows a sixth step in the method implemented using the Figure 1-5 machine;
Figure 7 shows a seventh step in the method implemented using the Figure 1-6 machine;
Figure 8 shows an eighth step in the method implemented using the Figure 1-7 machine;
Figure 9 shows a ninth step in the method implemented using the Figure 1-8 machine;
Figure 10 shows a tenth step in the method implemented using the Figure 1-9 machine;
Figure 11 shows an eleventh step in the method implemented using the Figure 1-10 machine;
Figure 12 shows a twelfth step in the method implemented using the Figure 1-11 machine;
Figure 13 shows a thirteenth step in the method implemented using the Figure 1-12 machine.

The main object of the present invention is a machine 10 for cutting and stripping electric cables, and of which the accompanying drawings show only the component parts necessary for a clear understanding of its operation.

In addition to the usual devices employed on machines of this type, and which are not described for the sake of simplicity, machine 10 comprises a cutting and stripping head 100.

Head 100 in turn comprises a first input traction device 101 upstream from a cutting device 102; and a second output traction device 103 downstream from cutting device 102.

In other words, cutting device 102 is located between first traction device 101 - for drawing along an electric cable CV1 - and second traction device 103.

It should be pointed out that a generic electric cable CV1 comprises a number of electric wires (possibly interlaced strands) made of good-electrical-conducting material and enclosed in a sheath of insulating material, such as PVC.

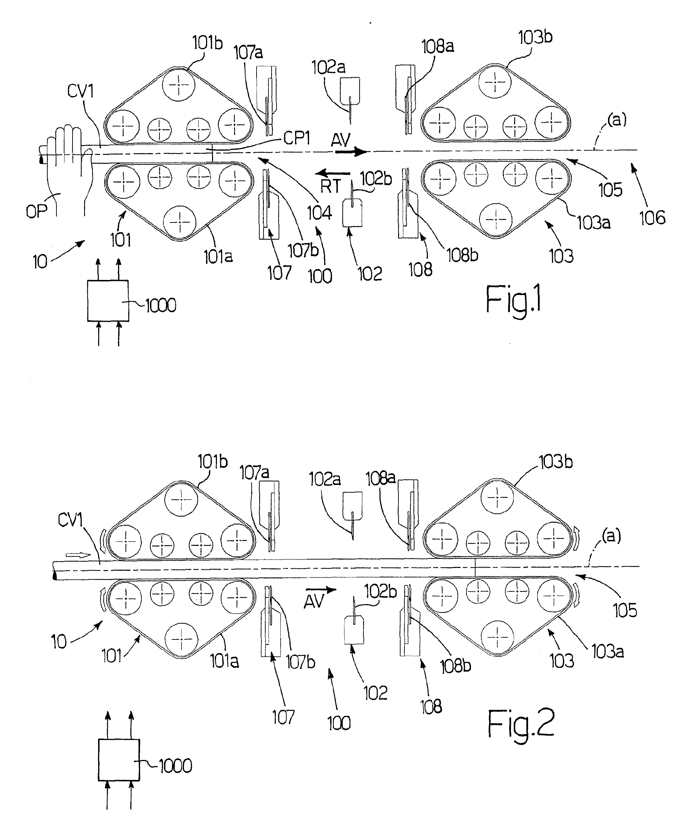

As shown in Figure 1, in the first step, electric cable CV1 is fed manually by an operator OP, who inserts a free end CP1 of electric cable CV1 into first traction device 101.

In the Figure 1 embodiment, both traction devices 101 and 103 are identical.

Devices 101 and 103 each comprise two powered belts 101a, 101b and 103a, 103b respectively.

Powered belts 101a and 101b are located on opposite sides of an axis and feed line (a) of electric cable CV1.

More specifically, in the course of the various processing steps, electric cable CV1 is fed in the direction indicated by arrow AV (from left to right in the accompanying drawings).

Similarly, powered belt 103a faces powered belt 103b.

By means of appropriate actuating devices (not shown), powered belts 101a, 101b can be moved further apart or closer together to define the transverse dimensions of a corridor 104 as a function of the diameter of cable CV1.

The same also applies to a corridor 105 defined between belts 103a and 103b.

As shown in Figure 1, cable CV1 is inserted manually by operator OP into corridor 104 of first traction device 101, and is gripped and drawn along by belts 101a, 101b in the direction of arrow AV.

Figure 2 shows the step in which cable CV1 is drawn by second traction device 103 to an output area 106 (Figure 1) of head 100.

As shown in Figures 1 and 2, a first stripping device 107 is located between cutting device 102 and first traction device 101, and a second stripping device 108 is located between cutting device 102 and second traction device 103.

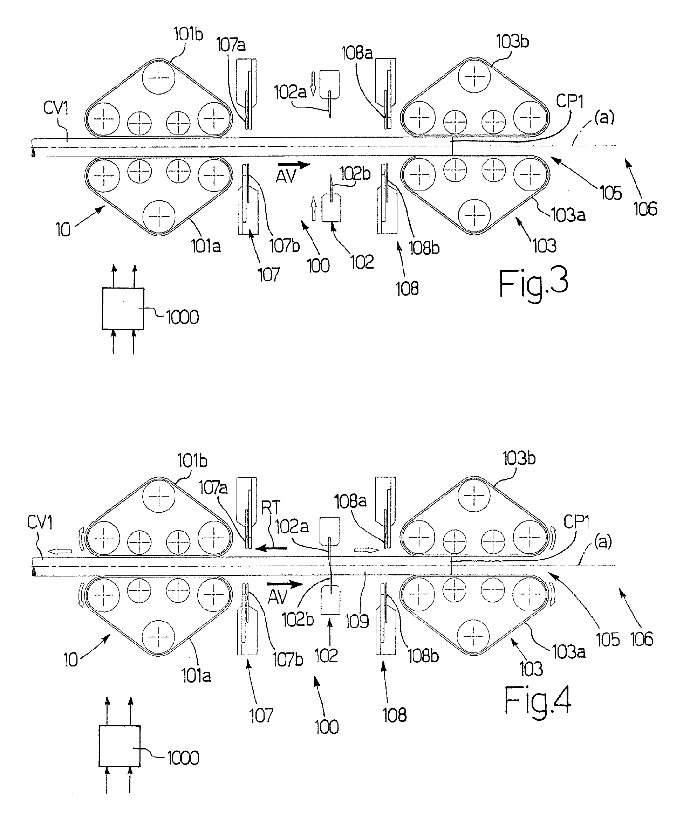

Figure 3 shows the step in which cable CV1, drawn along by devices 101, 103, is cut by the blades 102a, 102b of cutting device 102, by moving the two blades 102a, 102b symmetrically towards line (a).

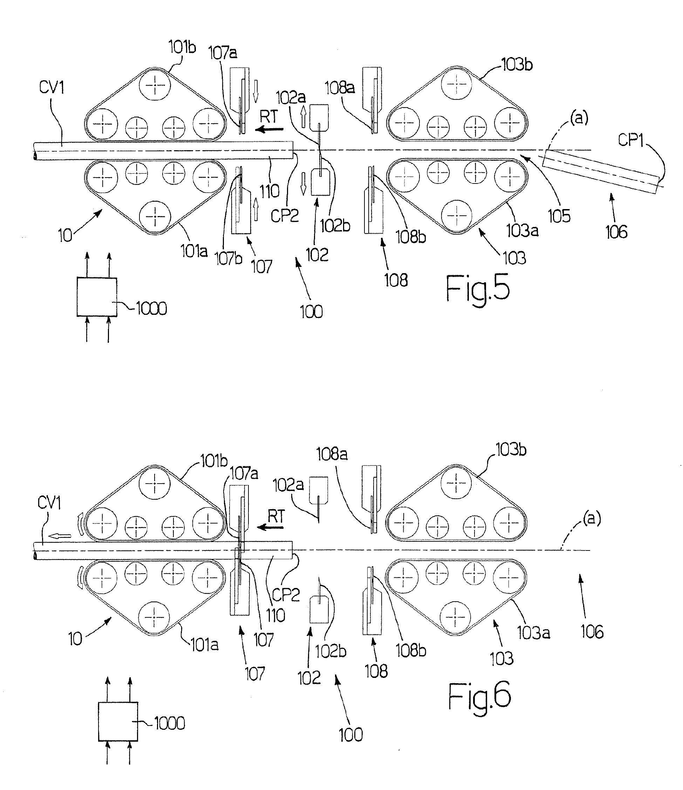

The waste 109 (Figure 4) is then removed from head 100 (in the direction of arrow AV) by operating device 103 only, and blades 102a, 102b of the cutting device are parted (Figure 5).

At this point, a new end CP2 of cable CV1 is backed up (in the direction of arrow RT, opposite the direction of arrow AV) by a predetermined amount (possibly set beforehand on machine 10 by operator OP) by operating first device 101.

As shown in Figure 5, blades 107a, 107b of stripping device 107 are closed, by moving towards line (a), to define a stripping portion 110 of cable CV1, close to end CP2.

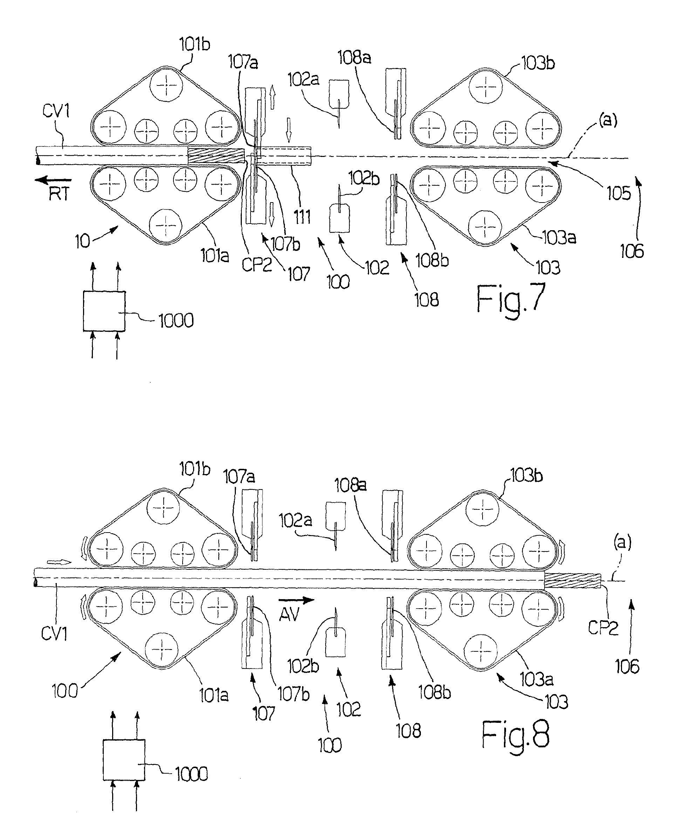

At this first stripping step, blades 107a, 107b, in known manner, only cut the plastic insulating sheath covering the wires, so that, when cable CV1 is backed up by first traction device 101 in the direction of arrow RT, end CP2 is stripped, and a piece of waste insulation 111, corresponding to stripping portion 110, is expelled (Figures 6 and 7).

Once end CP2 is stripped, blades 107a, 107b are parted (Figure 7).

As shown in Figure 8, the stripped end CP2 is fed forward (in the direction of arrow AV) by the desired length by the combined action of devices 101 and 103.

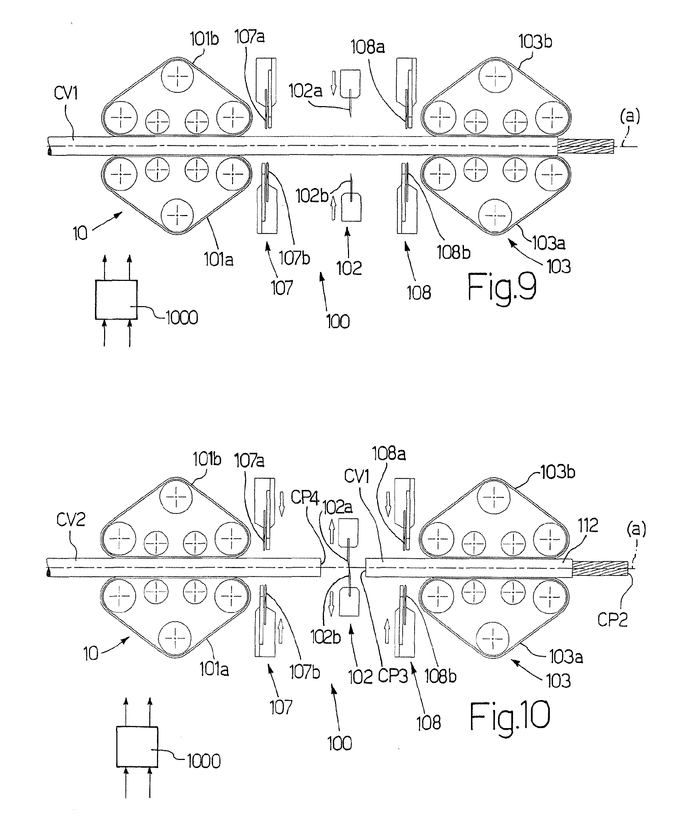

At the step shown in Figure 9, cable CV1 is cut transversely to size in the normal way by cutting device 102.

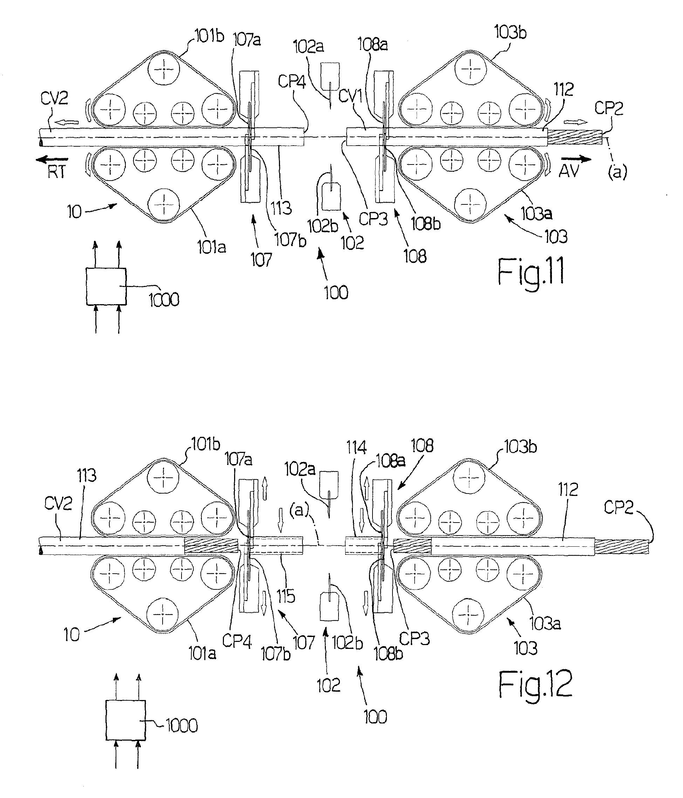

Figure 10 shows the step in which blades 102a, 102b open, i.e. are parted, and device 103 conveniently positions along line (a) a portion 112 of cable CV1 comprising end CP2.

Machine 10 then proceeds to also strip an end CP3 of portion 112 by combined operation of blades 108a, 108b of second stripping device 108 and second traction device 103.

Simultaneously with the positioning of portion 112, the remaining cable CV2 (Figure 11) is also positioned by first traction device 101 so that a relative end CP4 projects by a length defining a stripping portion 113.

One of the characteristics of the present invention, in fact, is the simultaneous operation of the two stripping devices 108 (on portion 112) and 107 (on the remaining cable CV2).

More specifically, as stated, device 108 acts on portion 112, which is then fed forward immediately by device 103 (in the direction of arrow AV) to remove a piece of waste sheath 114 (Figures 11, 12); and, at the same time (Figure 11), device 107 strips end CP4 of the remaining cable CV2 in coordination with device 101, which backs up the remaining cable CV2 in the direction of arrow RT, as shown in Figure 12, to produce a respective waste piece of sheath 115.

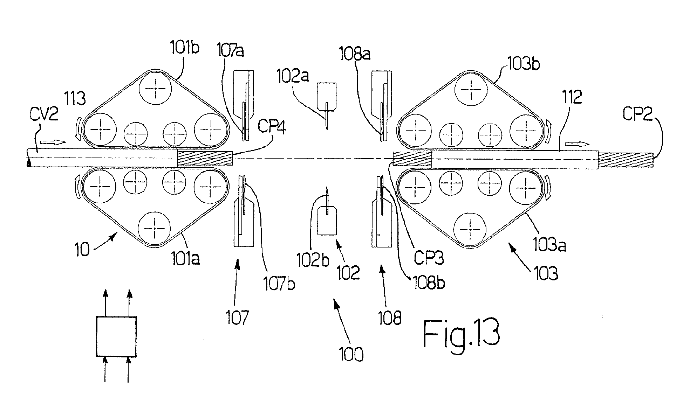

As shown in Figure 13, portion 112 has been cut to size and stripped of the desired amount of sheath at both ends CP2 and CP3 to produce two waste pieces 111 (Figure 7) and 114 (Figure 12), and the remaining cable CV2 has been stripped at end CP4 to produce a corresponding waste piece 115 (Figure 12).

Cutting and stripping may obviously continue on the remaining cable CV2 in the same way as described above.

All the cutting and stripping operations described are controlled and coordinated by an electronic central control unit 1000.

The main advantage of the machine according to the present invention lies in providing a cutting and stripping head 100 comprising two stripping devices 107, 108 for simultaneously stripping one end CP3 of one portion 112 and one end CP4 of the remaining cable CV2, thus saving time.

## Claims

1. A machine (10) for cutting and stripping electric cables (CV1, CV2) having a sheath of insulating material; the machine comprising a cutting and stripping head (100) for cutting and stripping said electric cables (CV1, CV2), and control means (1000) for controlling the devices forming part of said machine (10); the machine (10) being **characterized in that** said head (100) in turn comprises at least one cutting device (102) for cutting said cable (CV1, CV2); and comprising at least two stripping devices (107, 108) for stripping the ends (CP1; CP2; CP3; CP4) of said cable (CV1, CV2).

2. A machine (10) as claimed in Claim 1, **characterized in that** one of said stripping devices (107) is located on the opposite side of said cutting device (102) to the other of said stripping devices (108).

3. A method of cutting and stripping electric cables (CV1, CV2) having a sheath of insulating material; the method being **characterized by** comprising the steps of:
stripping a first end (CP2) of said cable (CV1);
feeding said cable (CV1) forward by the desired length, and cutting said cable (CV1) to form a cable portion (112) and a remaining cable (CV2);
feeding said remaining cable (CV2) forward by the desired length; and
stripping a second end (CP3) of said cable portion (112) and one end (CP4) of the remaining cable (CV2) simultaneously.

4. A method as claimed in Claim 3, **characterized in that** said second end (CP3) and said end (CP4) of the remaining cable (CV2) are stripped by respective stripping devices (107, 108).
